# EUROPEAN PATENT APPLICATION

(11) **EP 1 826 921 A1**
(43) Date of publication of application: **29.08.2007**
(21) Application number: 07110476.4
(22) Date of filing: 19.02.2003
(51) Int. Cl.: H04B 7/212, H04L 1/18

(54) **Method for biasing criteria in a wireless system**

(30) Priority: 19.02.2002 US 357947 P
(62) Divisional of application: 03713543.1
(71) Applicant: INTERDIGITAL TECHNOLOGY CORPORATION, Wilmington, DE 19801 (US)
(72) Inventor: Dick, Stephen G., Nesconset, NJ 11767 (US); Kim, Younglok, Fort Lee, NJ 07024 (US); Bolourchi, Nader, Larchmont, NY 10538 (US); Shin, Sung-Hyuk, Fort Lee, NJ 07024 (US)
(74) Representative: Ahrengart, Kenneth

(57) **Abstract**

A criterion for biasing a binary decision requiring an unequal protection (Fig 1) which utilizes a measured signal to interference ratio (SIR). The SIR may be derived from a determination of channel estimation. The SIR is compared against a threshold, the threshold being selected to bias the decision toward a NACK as opposed to an ACK determination. The technique is advantageous for providing biased binary decisions for high speed downlink packets (HSDP) but may be utilized for both uplink and downlink applications.

## Description

FIELD OF INVENTION

The present invention relates to wireless communications. More particularly the present invention relates to providing biased binary decisions for high speed downlink packets (HSDP).

BACKGROUND

In HSDP HSDPA, as well as many other communication systems, there are applications where a binary decision is required but wherein the penalty of error is unequal as between the two decisions.

For example, HSDPA uses an ACK/NACK signal where the user equipment (UE) indicates whether or not a transmitted block of data has been successfully decoded. It has been recognized that it is more injurious to system performance for a NACK message to be incorrectly interpreted as an ACK than for an ACK message to be incorrectly decoded as a NACK. In the latter case, the error would result in a transmission block being unnecessarily retransmitted; which amounts to only a small loss in efficiency. In the former case, the transmitting side would assume success for the previously transmitted block, and would not resend it. This is a catastrophic failure, causing serious system disruption.

Several obvious techniques have been recognized to bias the answer in favor of identifying the condition with the NACK. For example, in normal coherent demodulation of binary phase shift keying (BPSK), the output signal is often normalized, e.g., an ideal signal representing 1 is +1.0, while an ideal signal representing 0 would be -1.0 and, in a typical channel, which has impairments, interference and noise, the normalized output may take on any value therebetween.

In an unbiased decision, if an output z > 0 then the process declares 1, and, if the output z < 0 then the process declares the output = 0. In a biased decision, if the output z > X then declare 1, otherwise declare 0. X is identified as the threshold value and is selected based on the analysis. If it is desired to favor the output 1, then X will be negative; e.g., a small negative number; e.g., minus 0.1, etc.

Employing the above process, normalizing the output and deriving the optimum threshold can be delicate and complex to implement and is subject to degradations due to tolerances in the implementation.

SUMMARY OF THE INVENTION

In accordance with the present invention a criterion is utilized which makes the decision much simpler and more reliable in application, which criterion is significantly more reliable than the simple X threshold.

In accordance with this criterion, for time division duplex (TDD), the criterion is based on the measured signal to interference ratio (SIR), which is derived from the channel estimation process. It can be shown that virtually all instances of error occur when the SIR value is low.

Correlation between failures, or near failures of the radio modulation (RM) decoder and errors in the other bits of the transmission is high; therefore, the criterion of the present invention is highly reliable and can be easily implemented.

BRIEF DESCRIPTION OF THE FIGURES

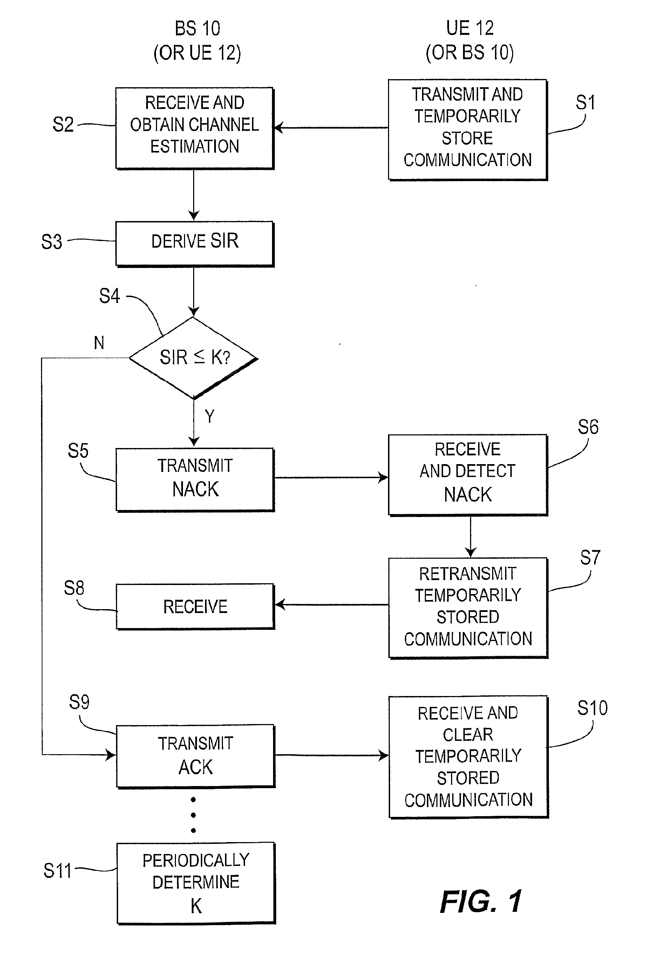

Figure 1 is a diagrammatic representation of apparatus for practicing the novel methods of the present invention.

DETAILED DESCRIPTION OF THE PREFERRED EMBODIMENT(S)

Figure 1 shows a routine utilized to practice the technique of the present invention. In the example shown, which is a downlink example, a device such as a base station (BS10), based on a communication from UE12, provided at step S1, utilizes this communication to obtain channel estimation, at step S2.

The BS10 derives a signal to interference ratio (SIR), from the channel estimation, at step S3 using well known techniques. At step S4 BS10 compares the SIR obtained at step S3 with a given threshold.

The threshold may be determined by employing any one of a variety of different techniques. One technique which may be used is to determine, through a combination of analysis, aided by simulation, and actual testing, with a test set-up. Test signals plus noise are input to the test set-up and output signals are examined. The output signals are measured and the correctness of the binary decision is also determined. This test is repeated over an entire range of useful signals, including very low signals. For each amplitude level, the number of instances of correct decisions and incorrect decisions are stored. Generally, strong signals are associated with very high frequency of correct decisions and weak signals are associated with high instances of incorrect decisions. The threshold is preferably greater than the level of noise taken alone.

Since the objective is to avoid one particular type of error; e.g. probability of declaring an ACK, given that a NACK was sent, the threshold is selected i.e., biased, so that, when signals are above the threshold, there is an acceptably low frequency of errors and when signals fall below this threshold there is an unacceptable frequency of occurrence of errors. Since the objective is to avoid false declarations of ACK, any decision that occurs with a signal below the threshold is declared as a NACK. More generally, when the signal is below the threshold the binary decision is thus biased to be the choice that causes the least catastrophic result, even if in error. This technique may be performed either off-line or periodically by the BS10 (or UE12), as shown by step S11. Also, if desired other techniques may be used to obtain a threshold value.

If the SIR is less than the threshold, BS10, at step S5, transmits a NACK signal to UE12. UE12, at step S6 receives and detects the NACK signal and, at step S7 retransmits the temporarily stored communication received by BS10 at step S8.

Returning step S4, assuming that the SIR is greater than the threshold value, the routine branches to Step S9 to transmit an ACK signal. The UE12 at step S10 receives the ACK signal and clears the communication temporarily stored at step S1.

It should be understood that the routine shown in Fig. 1 is equally applicable to uplink wherein the functions performed by the BS10 and UE12 are reversed, and it is the BS10 that transmits and temporarily stores a communication at step S1. The UE12 obtains channel estimation at step S2, derives the SIR, at step S3, compares the SIR derived with a given threshold, at step S4, and transmits a NACK to the BS at step S5. BS10, receiving the NACK and retransmits the temporarily stored communication at steps S6 and S7 respectively, the retransmitted communication being received by the UE12 at step S8. In the event that the SIR is greater than the threshold setting, the UE transmits an ACK condition at S9, which is received by the BS10 at step S10 whereby the ACK signal causes the BS10 to clear the temporarily stored communication.

It should be understood that the technique of the present invention may also be used simultaneously in both uplink and downlink communications between a UE and a BS.

## Claims

1. A method for biasing criteria for binary decisions requiring unequal protection in a wireless communication system, comprising:
receiving a communication in a given channel;
obtaining a signal to interference ratio (SIR) of the communication channel; and
comparing the SIR against a given threshold, said threshold being selected to bias the criteria toward a transmission of a (NACK) condition to indicate that a received communication should be retransmitted.

2. The method of claim 1 wherein said SIR is obtained by initially obtaining a channel estimation and deriving the SIR from the channel estimation.

3. The method of claim 1 wherein the step of comparing comprises:
determining the threshold by combining, with noise, each of a plurality of test signals having signal strengths extending over a given range;
determining correctness of each combined signal;
determining instances of correct signals and incorrect signals at each signal strength; and
selecting a threshold which provides an acceptable number of false declarations of an ACK condition.

4. The method of claim 3 wherein the comparing step includes using signal amplitude as a measure of signal strength.

5. The method of claim 3 wherein the threshold is preferably greater than a level of the noise taken alone.

6. The method of claim 1 wherein the step of comparing comprises:
setting the threshold to a level that is low enough so that an acceptable low frequency of errors occurs for SIRs above the threshold and high enough to prevent an unacceptable high number of errors for SIRs below the threshold.

7. The method of claim 1 wherein the channel estimation is based on a communication from a sender.

8. The method of claim 3 wherein the sender temporarily stores the communication sent to the receiver.

9. The method of claim 8 wherein the sender, upon receipt of a NACK signal retransmits the temporarily stored communication.

10. The method of claim 1 wherein the receiver transmits an ACK condition acknowledging receipt of an error free communication.

11. The method of claim 8 wherein said sender, upon receipt of an ACK signal clears the temporarily stored communication.

12. Apparatus for biasing criteria for binary decisions requiring unequal protection in a wireless communication system, comprising:
means for receiving a communication in a given channel;
means for obtaining a signal to interference ratio (SIR) of the communication channel; and
means for comparing the SIR against a given threshold, said threshold being selected to bias the criteria toward a transmission of a (NACK) condition to indicate that a received communication should be retransmitted.

13. The apparatus of claim 12 wherein said SIR is obtained by means for initially obtaining a channel estimation, said means for obtaining deriving the SIR from the channel estimation.

14. The apparatus of claim 12 wherein the means for comparing comprises:
means for determining the threshold by combining, with noise, each of a plurality of test signals having signal strengths extending over a given range;
means for determining correctness of each combined signal;
means for determining instances of correct signals and incorrect signals at each signal strength; and
means for selecting a threshold which provides an acceptable number of false declarations of an ACK condition.

15. The apparatus of claim 14 wherein the means for comparing further comprises means using signal amplitude as a measure of signal strength.

16. The apparatus of claim 14 wherein the threshold is preferably greater than a signal strength of a noise signal taken alone.

17. The apparatus of claim 12 wherein means for initially obtaining the channel estimation is based on a communication means of a sender.

18. The apparatus of claim 13 wherein the sender's communication means includes means for temporarily storing the communication sent to the receiver.

19. The apparatus of claim 18 wherein the sender is provided with means for receiving a NACK signal and means to retransmit a temporarily stored communication responsive to the means for receiving.

20. The apparatus of claim 12 further comprising means for transmitting an ACK condition acknowledging receipt of an error free communication when the SIR is greater than the threshold.

21. The apparatus of claim 12 wherein means are provided for receiving an ACK condition and means for clearing a temporarily stored communication responsive to said means for receiving an ACK condition.

22. The apparatus of claim 12 wherein the means for comparing comprises:
means for setting the threshold to a level that is low enough so that an acceptable low frequency of errors occurs for SIRs above the threshold and high enough to prevent an unacceptable high number of errors for SIRs below the threshold.
